# EUROPÄISCHE PATENTSCHRIFT

(11) **EP 3 714 279 B1**
(45) Veröffentlichungstag und Bekanntmachung des Hinweises auf die Patenterteilung: **31.12.2025**
(21) Anmeldenummer: 18803931.7
(22) Anmeldetag: 13.11.2018
(51) Int. Cl.: G01Q 30/04, G01Q 70/10, G01Q 70/16

(54) **COMPUTERIMPLEMENTIERTES VERFAHREN ZUM BEREITSTELLEN EINES DATENSATZES EINER SPITZE FÜR EINE SONDENEINRICHTUNG FÜR DIE RASTERSONDENMIKROSKOPIE**
COMPUTER-IMPLEMENTED METHOD FOR PROVIDING A DATA SET OF A TIP FOR A PROBE DEVICE FOR SCANNING PROBE MICROSCOPY
PROCÉDÉ MIS EN OEUVRE PAR ORDINATEUR POUR FOURNIR UN ENSEMBLE DE DONNÉES D'UNE POINTE POUR UN DISPOSITIF DE SONDE POUR LA MICROSCOPIE À SONDE À BALAYAGE

(30) Priorität: 23.11.2017 DE 102017127645
(43) Veröffentlichungstag der Anmeldung: 30.09.2020
(73) Patentinhaber: Nanotools GmbH, 81379 München (DE)
(72) Erfinder: IRMER, Bernd, 81369 Muenchen (DE)
(74) Vertreter: Canzler & Bergmeier Patentanwälte Partnerschaft mbB
(86) Internationale Anmeldenummer: PCT/EP2018/081016
(87) Internationale Veröffentlichungsnummer: WO 2019/101570

(56) Entgegenhaltungen:
- BERNARD HAOCHIH LIU ET AL: "Simulation-aided design and fabrication of nanoprobes for scanning probe microscopy", ULTRAMICROSCOPY, ELSEVIER, AMSTERDAM, NL, vol. 111, no. 5, 14 January 2011 (2011-01-14), pages 337 - 341, XP028370713, ISSN: 0304-3991, [retrieved on 20110126], DOI: 10.1016/J.ULTRAMIC.2011.01.025
- SANSOZ F ET AL: "A force-matching method for quantitative hardness measurements by atomic force microscopy with diamond-tipped sapphire cantilevers", ULTRAMICROSCOPY, ELSEVIER, AMSTERDAM, NL, vol. 111, no. 1, 1 December 2010 (2010-12-01), pages 11 - 19, XP027518017, ISSN: 0304-3991, [retrieved on 20101123], DOI: 10.1016/J.ULTRAMIC.2010.09.012

## Beschreibung

Die vorliegende Erfindung betrifft ein computerimplementiertes Verfahren zum Bereitstellen eines Datensatzes einer Spitze für eine Sondeneinrichtung für die Rastersondenmikroskopie, insbesondere für die Rasterkraftmikroskopie, wobei ein Rastersondenmikroskop mit Hilfe einer auf einem Ausleger der Sondeneinrichtung angeordneten Spitze mit einer Spitzengeometrie zur Vermessung einer Probe verwendet wird.

Die Rastersondenmikroskopie bzw. die Rasterkraftmikroskopie kann beispielsweise dazu eingesetzt werden, um Halbleiterbauelemente und darin angeordnete Strukturen zur Qualitätssicherung abzutasten. Die Strukturen können beispielsweise Gräben und/oder Löcher im Halbleiterbauelement umfassen, die eine Breite bzw. einen Durchmesser von einigen zehn Nanometern und eine Tiefe von einigen 100 Nanometern aufweisen können. Um beispielsweise eine Geradheit und/oder eine Parallelität von Wänden der Gräben und/oder eine Tiefe der Gräben und/oder von Löchern vermessen zu können, wird die Spitze in die Gräben oder die Löcher eingeführt. Diese muss natürlich dementsprechend dünn ausgebildet sein. Außerdem muss die Spitze eine gewisse Länge aufweisen, um auch einen Boden der Gräben oder der Löcher abtasten zu können. Aufgrund von Wechselwirkungen zwischen der Spitze und den Wänden der Gräben kann jedoch das Messergebnis verfälscht werden. Diese kann insbesondere darin begründet sein, dass die Spitze beim Abtasten der Wände ausgelenkt wird. Die Spitze kann beispielsweise durch van-der-Waals-Wechselwirkungen an die Wände herangezogen werden. Die Spitze kann sich beispielsweise in Richtung der Wand verbiegen. Eine zuverlässige Messung ist dadurch natürlich nur schlecht möglich. Um die Auslenkung der Spitze so gering wie möglich zu halten, kann entweder eine relativ dicke Spitze benutzt werden. Andererseits kann die Länge der Spitze auch so gering wie möglich gehalten werden, um die Auslenkung der Spitze zu vermindern. Wenn allerdings dickere Spitzen zum Messen verwendet werden, kann die Messauflösung sinken. Im Allgemeinen kann versucht werden, eine Steifigkeit der Spitze so hoch wie möglich anzusetzen, um das Verbiegen und/oder das Auslenken der Spitze so gering wie möglich zu halten.

Ein Verfahren zum Herstellen einer Sondeneinrichtung ist in BERNARD HA-OCHIH LIU ET AL: "Simulation-aided design and fabrication of nanoprobes for scanning probe microscopy", ULTRAMICROSCOPY, ELSEVIER, AMSTERDAM, NL, Bd. 111, Nr. 5, Seiten 337-341 offenbart.

Eine Spitze einer Sondeneinrichtung aus Diamant ist in SANSOZ F ET AL: "A force-matching method for quantitative hardness measurements by atomic force microscopy with diamond-tipped sapphire cantilevers", ULTRAMICROSCOPY, ELSEVIER, AMSTERDAM, NL, Bd. 111, Nr. 1, Seiten 11-19 offenbart.

Aus der DE 10 2006 008 858 A1 ist eine Sondeneinrichtung für die Rastersondenmikroskopie bekannt, umfassend einen Ausleger sowie eine auf dem Ausleger ausgebildete, mittels additiver Verfahren hergestellte Spitze im Nanometerbereich, mit der zu vermessende Proben abgetastet werden können. Nachteilig daran ist es, dass die Geometrie der Spitze vorgegeben ist, so dass ein Abtasten der Probe mit derartigen Spitzen nicht optimal ist.

Aufgabe der vorliegenden Erfindung ist es somit, diesen Nachteil zu beseitigen.

Die Aufgabe wird gelöst durch die Gegenstände der unabhängigen Patentansprüche.

Vorgeschlagen wird ein computerimplementiertes Verfahren zum Bereitstellen eines Datensatzes einer Spitze für eine Sondeneinrichtung für die Rastersondenmikroskopie. Bei der Rastersondenmikroskopie kann es sich um die Rasterkraftmikroskopie handeln. Ein Rastersondenmikroskop kann mit Hilfe einer auf einem Ausleger der Sondeneinrichtung angeordneten Spitze mit einer Spitzengeometrie eine Probe vermessen. Die Spitze ist somit das Messorgan, mit dem die Probe und/oder die Probenstruktur vermessen werden kann. Die Spitze kann beispielsweise eine Rasterkraftmikroskopspitze bzw. eine Spitze für ein Rasterkraftmikroskop sein.

Die Spitze kann ferner zum Vermessen der Probe eine Dicke im Bereich von einigen Nanometern und eine Länge von einigen 100 nm aufweisen. Die Spitze kann aber auch eine Länge von einigen 1000 nm aufweisen. Ein Verhältnis auch der Länge der Spitze und der Dicke der Spitze kann bis zu 100 betragen. Die Spitze kann außerdem zylinderförmig ausgebildet sein. Zusätzlich oder alternativ kann die Spitze auch einen elliptischen Querschnitt aufweisen. Die genauen Abmessungen und Form hängen natürlich von den Kundenanforderungen ab. Die Länge kann beispielsweise auch nur einige zehn Nanometer betragen. Die Länge, Dicke und die Form der Spitze können mittels einer Spitzengeometrie beschrieben werden.

Das erfindungsgemäße computerimplementierte Bereitstellen des Datensatzes kann lediglich das Zurverfügungstellen eines Datensatzes umfassen, der die Spitze zumindest teilweise beschreibt. Der Datensatz kann beispielsweise CAD-Daten umfassen, die eine Geometrie der Spitze festlegen. Dadurch kann beispielsweise über das Internet dem Kunden der Datensatz geschickt werden, der daraufhin die Spitze gemäß dem Datensatz selbst herstellt oder herstellen lassen kann. An das erfindungsgemäße computerimplementierte Bereitstellen eines Datensatzes einer Spitze für die Sondeneinrichtung kann sich der Herstellungsprozess der Spitze auf dem Ausleger anschließen, um die derart produzierte Sondeneinrichtung mit der Spitze auf dem Ausleger an einen Kunden zu schicken.

Erfindungsgemäß wird in einem dem eigentlichen, die Spitze produzierenden Herstellungsprozess vorgelagerten Schritt die Spitzengeometrie ausgehend von einer ausgewählten Spitzengrundform hinsichtlich definierter, geforderter Messeigenschaften optimiert, indem die Spitzengeometrie bezüglich dieser Messeigenschaften rechnergestützt simuliert, bewertet und in Abhängigkeit der Bewertung die Spitzengeometrie verändert wird.

Die Messeigenschaften können beispielsweise vom Kunden vorgegeben sein, der mit Hilfe der Spitze eine bestimmte Struktur, beispielsweise Gräben und/oder Löcher, eines in der Herstellung befindlichen oder eines fertiggestellten Halbleiterbauelements vermessen will, um beispielsweise Aussagen über die Qualität des Halbleiterbauelements treffen zu können. Der Kunde stellt dabei beispielsweise die Messeigenschaften an die Spitze, dass mit dieser die Struktur eines Halbleiterbauelements ausreichend genau, also mit einer entsprechend hohen Messauflösung, vermessen werden kann. Mit Hilfe der Spitze soll beispielsweise gemäß dem Kunden ferner eine Tiefe, eine Breite und/oder eine Form der Gräben und/oder Löcher einer Probe erfasst werden. Beispielsweise sollen auch die Wände und/oder der Boden der Gräben vermessen oder auch die Ecken der Gräben abgetastet werden. Eine Parallelität der Wände oder ein Winkel der Ecken der Gräben kann ebenfalls eine Voraussetzung dafür sein, dass das Halbleiterbauelement eine hohe Qualität aufweist, so dass der Kunde die Wände oder Ecken dahingehend vermessen möchte.

Beispielsweise stellt der Kunde die Anforderung an die Messeigenschaften, dass mittels der Spitze ein 200 nm tiefer Graben abgetastet werden soll, woraufhin beispielsweise eine Spitze mit einer Spitzengrundform ausgewählt werden kann, die beispielsweise 10% - 50% länger ist. Dadurch kann zumindest ein Graben mit einer Tiefe von 200 nm abgetastet werden. Des Weiteren kann eine Spitzengrundform gewählt werden, die die oben genannte Messauflösung zulässt. Außerdem kann die Spitzengrundform dafür geeignet sein, die oben genannten Ecken der Gräben zu vermessen. Mittels der Spitzengrundform kann bereits eine Vorauswahl aus verschiedenen, bereits vorhandenen Spitzengeometrien getroffen werden. Die Auswahl der Spitzengrundform kann dabei auf Erfahrungswerten basieren. Die Spitzengrundform kann somit als Startpunkt für die darauf folgende Optimierung der Spitzengeometrie dienen.

Die Optimierung kann beispielsweise dahingehend durchgeführt werden, dass die Spitze so dünn wie möglich ausgebildet wird, dabei aber eine Steifigkeit noch ausreichend hoch ist, um ein Verbiegen und/oder ein Auslenken der Spitze in Richtung einer Wand so gering wie möglich zu halten und um eine Messauflösung nicht zu sehr zu beeinflussen. Zusätzlich oder alternativ kann die Optimierung auch darin bestehen, dass die Spitze so lang wie möglich ausgebildet wird, um bei Bedarf noch tiefere Strukturen vermessen zu können. Auch hierbei darf der Gesichtspunkt der Steifigkeit der Spitze nicht außer Acht gelassen werden.

Um die Spitzengeometrie zu optimieren, wird diese erfindungsgemäß bezüglich der gewünschten bzw. geforderten Messeigenschaften simuliert und bewertet. Mit Hilfe der Simulation kann beispielsweise bei gegebener Spitzengeometrie, beispielsweise der Dicke, der Länge der Spitze und/oder der Form des Querschnitts der Spitze, eine Auslenkung der Spitze beim Messen des Grabens berechnet werden. Anschließend kann die Bewertung durchgeführt werden, mit deren Hilfe entschieden werden kann, ob die simulierte Auslenkung der Spitze noch im Rahmen der vom Kunden geforderten Messeigenschaften liegt.

Die Bewertung kann beispielsweise derart sein, dass die vom Kunden geforderten Messeigenschaften nicht erreicht sind. Beispielsweise kann die Spitze zu kurz sein, um den Graben und/oder das Loch im Halbleiterbauelement bis auf den Boden zu vermessen. Die Bewertung kann selbstverständlich auch zu dem Ergebnis kommen, dass die Messeigenschaften des Kunden erreicht sind. In Abhängigkeit der Bewertung kann die Spitzengeometrie verändert werden. Sind die Messeigenschaften beispielsweise nicht erreicht, kann die Spitzengeometrie derart verändert werden, dass beispielsweise die Spitze länger ausgebildet wird.

Bei der Bewertung der Messeigenschaften wird eine Steifigkeit berücksichtigt. Die Steifigkeit kann einen Widerstand gegen ein Verbiegen beschreiben. Die Steifigkeit kann ferner vom Elastizitätsmodul der Spitze abhängen. Der Kunde kann beispielsweise die Anforderung an die Spitze stellen, dass die Spitze eine bestimmte Steifigkeit aufweist. Zusätzlich wird auch eine Messauflösung der Spitze bei der Bewertung berücksichtigt. Um Strukturen der Probe vermessen zu können, muss auch die Messauflösung in dem Bereich der Größe der Struktur liegen. Die Messauflösung ist somit besonders bevorzugt einer der wichtigen Bewertungsparameter der Spitze. Zusätzlich können auch die Abmessungen der Spitze berücksichtigt werden. Die Spitze muss beispielsweise eine derartige Länge aufweisen, dass ein Boden einer Struktur vermessen werden kann.

Vorteilhaft ist es, wenn bei der Bewertung der Steifigkeit der Spitze ein Bewertungswert zugeordnet wird. Weist die Spitze beispielsweise eine simulierte Steifigkeit auf, die der vom Kunden geforderten Steifigkeit zu 50% entspricht, kann der Spitze ein Bewertungswert bezüglich der Steifigkeit von 50% zugeordnet werden. Weist die Spitze beispielsweise eine simulierte Steifigkeit auf, die der Steifigkeit entspricht, die der Kunde fordert, kann dem ein Bewertungswert bezüglich der Steifigkeit von 100% zugeordnet werden. Weist die Spitze dagegen beispielsweise eine simulierte Steifigkeit auf, die dem Doppelten dem entspricht, was der Kunde fordert, kann dem ein Bewertungswert bezüglich der Steifigkeit von 200% zugeordnet werden. Dadurch kann eine quantitative Bewertung der Steifigkeit mittels der Simulation der Spitzengeometrie erfolgen. Der Bewertungswert kann dabei beispielsweise derartige Eigenschaften aufweisen, dass ein höherer Bewertungswert bessere Messeigenschaften der Spitze beschreibt.

Zusätzlich oder alternativ kann auch der Messauflösung der Spitze ein Bewertungswert zugeordnet werden. Stellt sich bei der Simulation beispielsweise heraus, dass die Spitze lediglich eine Messauflösung aufweist, die 50% der vom Kunden geforderten Messauflösung entspricht, kann dem der Bewertungswert von 50% zugeordnet werden. Dadurch kann ebenfalls die simulierte Messauflösung quantifiziert werden. Auch hier kann ein höherer Bewertungswert bessere Messeigenschaften, hier die Messauflösung, beschreiben.

Zusätzlich oder alternativ kann auch den Abmessungen der Spitze ein Bewertungswert zugeordnet werden. Die Abmessungen können die Dicke und die Länge der Spitze umfassen. Um beispielsweise einen Boden eines Grabens und/oder eines Lochs eines Halbleiterbauelements vermessen zu können, muss die Spitze eine Dicke aufweisen, die dünner ist als die Breite des Grabens, um in diesen eingeführt werden zu können. Außerdem muss die Spitze auch länger sein, als die Tiefe des Grabens, um diesen erreichen zu können. Die Abmessungen der Spitze müssen die Eignung aufweisen, die Struktur und/oder die Probe vermessen zu können. Den Abmessungen können beispielsweise ein boolescher Bewertungswert, nämlich "ja" oder "nein", zugeordnet werden. Den Abmessungen, beispielsweise der Dicke, kann beispielsweise ein Wert von "0" oder "1" zugeordnet werden. Der Bewertungswert "1" steht dabei beispielsweise dafür, dass mit Hilfe der simulierten Spitzengeometrie die Probe gemessen werden kann. Der Wert "0" kann dagegen dafür stehen, dass mit der Spitze die Probe nicht gemessen werden kann, wobei die Spitze beispielsweise aufgrund ihrer Dicke nicht in die Struktur eingeführt werden kann.

Vorteilhafterweise können die Bewertungswerte aus der Bewertung der Steifigkeit, der Messauflösung und/oder den Abmessungen der Spitze miteinander kombiniert werden. Zumindest zwei Bewertungswerte können zu einem Gesamtbewertungswert zusammengefasst werden. Dadurch kann mit einem einzigen Wert die Spitze beschrieben werden. Dabei kann der Gesamtbewertungswert derart gebildet werden, dass ein höherer Gesamtbewertungswert bessere Messeigenschaften beschreibt.

Die Spitzengeometrie wird sukzessive durch Wiederholen der Schritte des rechnergestützten Simulierens, Bewertens und Veränderns optimiert. Dadurch kann die Spitze immer weiter verbessert werden. Wenn beispielsweise in einem vorherigen Veränderungsschritt die Spitze aufgrund der Bewertung verlängert wurde, kann die verlängerte Spitzengeometrie nun erneut simuliert werden, um zu überprüfen, ob die Spitze zum Abtasten der Struktur der Probe des Kunden geeignet ist und/oder ob die Spitze den geforderten Messeigenschaften entspricht. Es ist nicht auszuschließen, dass sich die verlängerte Spitze nun derart weit auslenkt, dass damit die Messung nicht mehr mit der geforderten Messauflösung durchführbar ist. Nach der Simulation wird daher bevorzugt wieder die Bewertung durchgeführt. Danach kann entschieden werden, ob die Spitze noch innerhalb der geforderten Messeigenschaften liegt, oder ob die in die Simulation eingeflossenen Änderungen wieder rückgängig gemacht werden müssen. Zusätzlich oder alternativ können auch andere Änderungen an der Spitzengeometrie vorgenommen werden.

Zusätzlich oder alternativ ist es von Vorteil, wenn das Simulieren, das Bewerten und das Verändern der Spitzengeometrie mehrmals hintereinander durchgeführt werden. Dadurch kann in einem iterativen Prozess die Spitzengeometrie optimiert werden. Beispielsweise kann die Spitze sukzessive verlängert werden. Dabei kann nach jeder einzelnen Verlängerung die Spitzengeometrie simuliert und bewertet werden. Wenn beispielsweise die Spitze nach einer einzelnen Veränderung nicht mehr den geforderten Messeigenschaften entspricht, kann beispielswiese die Änderung wieder rückgängig gemacht werden und die Spitze vorzugsweise anderweitig verändert werden.

Von Vorteil ist es auch, wenn das rechnergestützte Optimieren der Spitzengeometrie teilautomatisiert durchgeführt wird. Dabei kann beispielsweise die Simulation und/oder Bewertung teilautomatisiert erfolgen. Es kann beispielsweise ein Intervall von einer geringsten bis zu einer höchsten Spitzenlänge vorgegeben werden, wobei verschiedene Spitzen mit verschiedenen Spitzenlängen gemäß dem Intervall simuliert werden. Das Intervall kann beispielsweise in einigen 10 Schritten durchsimuliert werden. Es kann also beispielsweise eine Spitze mit einer Länge von 200 nm begonnen werden, wobei die Länge schrittweise um 5 nm bis zu 300 nm erhöht wird. Jede einzelne Spitze wird eigens simuliert und kann eigens bewertet werden. Zusätzlich oder alternativ kann auch die Spitzendicke schrittweise gemäß einem Intervall simuliert werden. Beispielsweise können zu jeder einzelnen Spitzenlänge die Spitzendicke gemäß einem Intervall schrittweise simuliert werden. Diese Intervall und/oder die Intervallschritte können manuell eingegeben werden. Die Intervallgrenzen und/oder die Intervallschritte können dabei ebenfalls manuell verändert werden. Zusätzlich oder alternativ können auch andere Parameter der Spitze gemäß einem Intervall schrittweise simuliert werden. Beispielsweise kann ein Winkel in Übergangsbereichen, die jeweils eine unterschiedliche Spitzendicke aufweisen, gemäß einem Intervall verändert und entsprechend simuliert und bewertet werden. Ferner kann beispielsweise das Verändern der Spitzengeometrie manuell erfolgen. Ein Hersteller der Spitze kann bereits eine gewisse Erfahrung im Verhalten der Spitzengeometrie haben, so dass er ggf. gut weiß, um welche Länge er die Spitze verlängern kann oder ob die Spitze beispielsweise dicker ausgebildet werden muss.

Vorteilhaft ist es, wenn bei Überschreiten eines über einem festgelegten Grenzwert liegenden Bewertungswerts die Spitzendicke als Teil der Spitzengeometrie in zumindest einem Bereich verringert wird. Zusätzlich oder alternativ kann auch bei Überschreiten des über einem festgelegten Gesamtbewertungswerts die Spitzendicke als Teil der Spitzengeometrie in zumindest einem Bereich bei der Simulation verringert werden. Die Spitze kann somit beispielsweise steifer sein als vom Kunden gefordert. Die Spitzendicke kann dann in zumindest einem Bereich in der Simulation verringert werden, so dass die Spitze beispielsweise tiefer in einen Graben und/oder ein Loch des Halbleiterbauelements eingeführt werden kann, aber trotzdem noch eine ausreichende Steifigkeit aufweist. Vorzugsweise kann die Spitze in einem vorderen Bereich verdünnt werden, so dass der vordere Teil der Spitze feinere Strukturen abtasten kann.

Zusätzlich oder alternativ kann bei Unterschreiten eines unter dem festgelegten Grenzwert liegenden Bewertungswerts und/oder Gesamtbewertungswerts die Spitzendicke in zumindest einem Bereich vergrößert werden. Die Steifigkeit kann beispielsweise nicht ausreichen, so dass die Spitze in zumindest einem Bereich dicker simuliert wird, um die Steifigkeit zu erhöhen. Dabei kann darauf geachtet werden, dass die Spitze noch in den Graben und/oder das Loch des Halbleiterbauelements eingeführt werden kann.

Von Vorteil ist es auch, wenn bei Überschreiten eines über einem festgelegten Grenzwert liegenden Bewertungswerts und/oder Gesamtbewertungswerts die Spitzenlänge als Teil der Spitzengeometrie bei der Simulation vergrößert wird. Wenn beispielsweise die Steifigkeit der Spitze die vom Kunden geforderte Steifigkeit überschreitet, kann die Spitzenlänge simulativ vergrößert werden, um noch tiefere Strukturen vermessen zu können.

Zusätzlich oder alternativ kann bei Unterschreiten eines unter dem festgelegten Grenzwert liegenden Bewertungswerts und/oder Gesamtbewertungswerts die besagte Spitzenlänge bei der Simulation verringert werden, beispielsweise wenn die berechnete und bewertete Steifigkeit nicht ausreicht, um die vom Kunden geforderte Steifigkeit zu erreichen. Um die Steifigkeit zu erhöhen, kann die Spitzenlänge verringert werden.

Vorteilhaft ist es, wenn die Schritte des Simulierens, des Bewertens und/oder des simulierten Verlängerns der Spitze so lange wiederholt werden, bis zumindest ein Bewertungswert der Spitzengeometrie einen vorher festgelegten Grenzwert überschreitet. Zusätzlich oder alternativ können die Schritte des Simulierens, des Bewertens und/oder des simulierten Verlängerns der Spitze so lange wiederholt werden, bis der Gesamtbewertungswert der Spitzengeometrie den vorher festgelegten Grenzwert überschreitet. Dadurch kann das rechnergestützte Optimieren verkürzt werden, da es beendet wird, wenn die vom Kunden geforderten Messeigenschaften überschritten sind.

Um eine Spitze mit guten Messeigenschaften zu erhalten, können die Schritte des Simulierens, Bewertens und/oder Veränderns so lange wiederholt werden, bis sich bei einer weiteren Veränderung der Spitzengeometrie zumindest ein Bewertungswert nicht mehr verbessert. Zusätzlich oder alternativ können die Schritte des Simulierens, Bewertens und/oder Veränderns so lange wiederholt werden, bis sich der Gesamtbewertungswert nicht mehr verbessert. Dadurch kann die Spitze so lange optimiert werden, bis eine Spitze mit optimalen Messeigenschaften erreicht ist.

Des Weiteren ist es von Vorteil, wenn die Spitzengeometrie simuliert, bewertet und verändert wird, bis sich bei einer weiteren Veränderung der Spitzengeometrie die Bewertung verschlechtert. Der Bewertung kann, wie oben beispielsweise beschrieben ist, ein Zahlenwert zugeordnet werden. Der Zahlenwert kann beispielsweise einer Prozentzahl der vom Kunden geforderten Steifigkeit entsprechen. Außerdem kann der Zahlenwert einen Prozentwert einer vom Kunden geforderten Messauflösung umfassen. Wenn sich dieser Zahlenwert bei einer weiteren Veränderung verschlechtert, kann das ein Hinweis darauf sein, dass die Spitzengeometrie mit diesen Parametern (bspw. Länge und/oder Dicke der Spitze) optimal ist. Dadurch kann entschieden werden, dass weitere Optimierungen nicht mehr nötig sind oder zumindest nicht mehr im Vergleich zum Arbeitsaufwand stehen.

Vorteilhafterweise kann die Simulation der Spitzengeometrie mit Hilfe von Finite-Elemente-Methoden durchgeführt werden. Zusätzlich oder alternativ kann auch die Bewertung mittels Finiter-Elemente-Methoden durchgeführt werden. Die Finite-Elemente-Methoden sind bewährte Verfahren zur Simulation beispielsweise einer Verbiegung von Bauteilen.

Des Weiteren ist es von Vorteil, wenn die Spitze gemäß der optimierten Spitzengeometrie mittels additiver und optional zusätzlich subtraktiver Herstellungsverfahren hergestellt wird. Das additive Verfahren kann beispielsweise eine elektronenstrahlinduzierte Abscheidung umfassen, mit dem gezielt und definiert die Spitze aufgebaut werden kann.

Ferner ist es vorteilhaft, wenn zumindest ein Teil eines Oberflächenabschnitts der Spitze zumindest nach einem Schritt des additiven Herstellungsverfahrens mittels des subtraktiven Verfahrens abgetragen wird. Das subtraktive Verfahren kann beispielsweise ein reaktives Ionen-Ätzen umfassen. Dadurch können beispielsweise zu dicke Bereiche der Spitze verdünnt werden.

In einer vorteilhaften Weiterbildung der Erfindung ist die Spitze zumindest teilweise aus einem amorphen Kohlenstoff ausgebildet. Zusätzlich oder alternativ kann die Spitze auch aus einem kristallinen Diamant ausgebildet sein. Diese Materialen weisen hohe Elastizitätsmodule auf, so dass die Spitze eine hohe Steifigkeit aufweist. Ein Verbiegen der Spitze ist damit vermindert.

Weitere Vorteile der Erfindung sind in den nachfolgenden Ausführungsbeispielen beschrieben. Es zeigen:
- **Figur 1**: eine schematische Seitenansicht einer Sondeneinrichtung mit einer Spitze auf einem Ausleger,
- **Figur 2**: eine beispielhafte Auswahl von Spitzengrundformen und
- **Figur 3**: ein Flussdiagramm des Bereitstellens der Spitze für die Rastersondenmikroskopie.

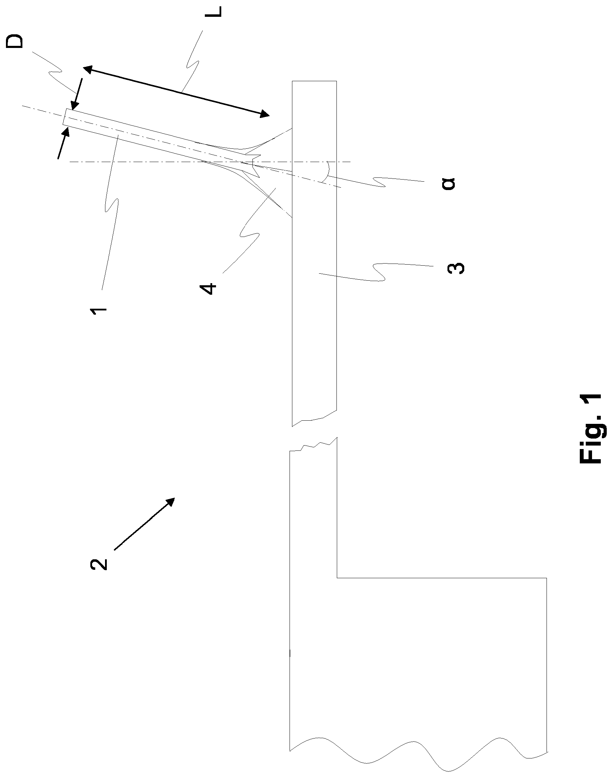

Figur 1 zeigt eine schematische Seitenansicht einer Sondeneinrichtung 2 mit einer Spitze 1 auf einem Ausleger 3. Die Sondeneinrichtung 2 kann für die Rastersondenmikroskopie verwendet werden. Die Sondeneinrichtung 2 kann aber auch für eine Rasterkraftmikroskopie verwendet werden. Gemäß dem vorliegenden Ausführungsbeispiel weist die Spitze 1 einen Winkel α zu einer Senkrechten zum Ausleger 3 auf. Alternativ kann die Spitze 1 auch senkrecht auf dem Ausleger 3 angeordnet sein. Die Spitze 1 kann ferner auf einem Spitzensockel 4 auf dem Ausleger 3 angeordnet sein. Der Spitzensockel 4 kann beispielsweise pyramidenförmig ausgebildet sein. Mit Hilfe des Spitzensockels 4 kann die Spitze 1 stabiler auf dem Ausleger 3 angeordnet sein.

Die Spitze 1 weist ferner eine Länge L auf. Zusätzlich weist die Spitze 1 eine Dicke D auf. Beispielsweise können die Länge L im Bereich von einigen 100 Nanometern und die Dicke D im Bereich von einigen zehn Nanometern, beispielsweise zwischen 3 nm und 20nm, liegen. Die Länge L der Spitze 1 kann aber auch einige, beispielsweise 10, Mikrometer betragen. Ein Querschnitt der Spitze 1 kann beispielsweise rund, elliptisch oder eckig ausgebildet sein.

Mittels der Spitze 1 kann ein Rastersondenmikroskop bzw. Rasterkraftmikroskop eine hier nicht gezeigte Probe abtasten. Bei der Probe kann es sich beispielsweise um ein in der Herstellung befindliches oder fertiggestelltes Halbleiterbauelement handeln, das an einer Oberfläche eine Struktur aufweist, die zur Qualitätssicherung von der Spitze 1 abgetastet werden kann. Die Struktur kann beispielsweise Gräben und/oder Löcher umfassen, die eine Tiefe und eine Breite aufweisen. Mit Hilfe der Spitze 1 kann die Tiefe abgetastet und dadurch überprüft werden, ob das Halbleiterbauelement den vom Kunden geforderten Messeigenschaften entspricht. Mit Hilfe der Spitze 1 kann auch eine Geradheit und/oder eine Parallelität der Wände der Gräben abgetastet werden. Für manche Anwendungen des Halbleiterbauelements kann auch eine Form von Ecken, insbesondere zwischen den Wänden und dem Boden der Gräben, eine Rolle spielen, so dass mit Hilfe einer Spitze 1 auch die Ecken der Gräben abgetastet werden können.

Wenn jedoch die Spitze 1 in einen derartigen Graben eingeführt wird, kann eine Spitze 1 beispielsweise aufgrund von van-der-Waals-Wechselwirkungen von der Wand angezogen werden, wobei sich die Spitze 1 aufgrund der Wechselwirkungen verbiegen kann. Eine Messung kann dadurch verfälscht werden, so dass eine Aussage über die Qualität der Struktur des Halbleiterbauelements nur schwer bzw. mit einer hohen Unsicherheit möglich ist.

Es ist daher vorteilhaft, wenn die Spitze 1 eine hohe Steifigkeit aufweist. Dadurch weist die Spitze 1 eine höheres Widerstandsmoment gegen Verbiegen auf und die Messung kann genauer durchgeführt werden. Die Steifigkeit kann dabei nicht nur von dem Material der Spitze abhängen, sondern auch von einer Spitzengeometrie, insbesondere der Länge L und der Dicke D.

Die Steifigkeit der Spitze 1 kann beispielsweise dadurch erhöht werden, dass eine Spitze 1 mit einer größeren Dicke D bereitgestellt wird. Dies ist jedoch nur in einem gewissen Rahmen möglich, da dadurch zum einen die Messauflösung der Spitze 1 sinken kann. Zum anderen kann die Dicke D der Spitze 1 nicht beliebig groß gewählt werden, da die Spitze 1 in einen Graben mit einer bestimmen Breite eingeführt werden muss.

Zusätzlich oder alternativ kann die Spitze 1 auch kürzer ausgebildet werden, so dass dadurch ebenfalls das Verbiegen der Spitze 1 reduziert werden kann. Allerdings muss auch hier darauf geachtet werden, dass mittels der Spitze 1 beispielsweise noch ein Boden des Grabens abgetastet werden kann.

Eine optimale Spitze 1 wäre beispielsweise um mehrere Faktoren länger als die Tiefe der zu vermessenden Struktur und wäre so dünn wie möglich, um auch kleine Strukturen hochauflösend vermessen zu können. Da dies in der Realität aufgrund des Verbiegens der Spitze 1 nicht möglich ist, muss stets ein Kompromiss zwischen Länge **L,** Dicke D und der Messauflösung gefunden werden. Gemäß dem erfindungsgemäßen Verfahren kann eine Spitzengeometrie der Spitze 1 optimiert werden. Dazu kann in einem dem Herstellungsprozess vorgelagerten Schritt eine Spitzengrundform gewählt werden. Ausgehend davon, kann die Spitzengeometrie hinsichtlich definierter, geforderter Messeigenschaften optimiert werden.

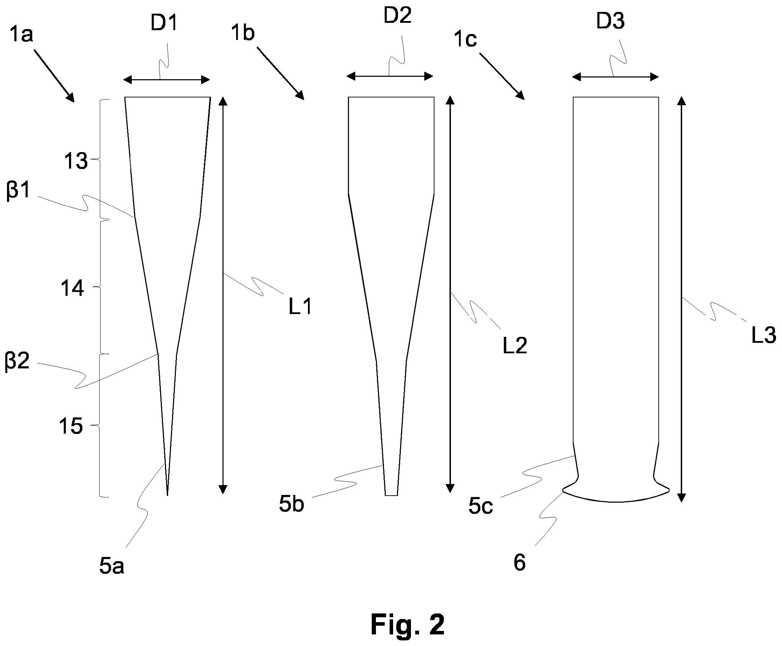

Figur 2 zeigt eine beispielhafte Auswahl an verschiedenen Spitzengrundformen 1a - 1c. Die Spitzengrundformen 1a - 1c können bereits als rechnerischer Datensatz vorhanden sein und als Vorlage für eine neue Spitze 1 dienen. Die Spitzengrundform kann beispielsweise gemäß den Kundenanforderungen ausgewählt werden. Es kann die Spitzengrundform 1a - 1c ausgewählt werden, die bereits am besten für die neuen Kundenanforderungen passt. Die Spitzengrundform kann somit als Startpunkt für die Optimierung der Spitzengrundform dienen.

Die Spitzengrundform 1a weist gemäß dem vorliegenden Ausführungsbeispiel einen vorderen Abschnitt 5a auf, der spitzig zuläuft. Damit kann beispielsweise eine Struktur eines Halbleiterbauelements abgetastet werden, das feine Gräben und/oder Löcher aufweist. Die Spitzengrundform 1a kann gemäß Figur 2 mehrere Bereiche 13, 14, 15 aufweisen. Die Bereiche 13, 14, 15 sind der Einfachheit halber lediglich an der Spitzengrundform 1a mit einem Bezugszeichen versehen. Gemäß dem vorliegenden Ausführungsbeispiels der Figur 2 weist die Spitzengrundform 1a drei Bereiche 13, 14, 15 auf, die entlang der Länge L1 zueinander benachbart sind. Die Spitzengrundformen 1a - 1c können auch mehr als drei Bereiche 13, 14, 15 aufweisen. Alternativ können die Spitzengrundformen 1a - 1c auch weniger als drei, beispielsweise zwei oder nur einen einzigen, Bereich(e) 13, 14, 15 aufweisen. Gemäß dem vorliegenden Ausführungsbeispiel verringert sich die Dicke D in Richtung des vorderen Abschnitts 5a. Zusätzlich oder alternativ kann eine Dicke D in einem Bereich entlang der Länge L1 auch konstant sein.

An dem zum vorderen Abschnitt 5a gegenüberliegenden Ende der Spitzengrundform 1a ist der erste Bereich 13 angeordnet, wobei dazu benachbart der zweite Bereich 14 angeordnet ist. Am Ende der Spitze 1a des vorderen Abschnitts 5a ist der dritte Bereich 15 angeordnet. Eine Dicke D der verschiedenen Bereiche 13, 14, 15 kann einzeln und/oder unabhängig voneinander optimiert werden. Dazu kann die Dicke D der Bereiche 13, 14, 15 einzeln verändert, simuliert und bewertet werden. Natürlich kann die Spitzengeometrie auch simuliert und bewertet werden, wenn nur in einem Bereich 13, 14, 15 die Dicke D verändert wurde. Zusätzlich oder alternativ können auch die Längen der einzelnen Bereiche 13, 14, 15 einzeln und unabhängig voneinander verändert, simuliert und bewertet werden. Des Weiteren können die Spitzen 1 auch mehr oder weniger als die drei Bereiche 13, 14, 15 des in der Figur 2 gezeigten Ausführungsbeispiels aufweisen.

Zwischen den drei Bereichen 13, 14, 15 sind im vorliegenden Ausführungsbeispiel jeweils Winkel β1, β2 ausgebildet, welche der Einfachheit halber wieder lediglich an der Spitzengeometrie 1a mit einem Bezugszeichen versehen sind. Der oder die Winkel β1, β2 zwischen den Bereichen 13, 14, 15 entlang der Länge L1 kann/können dabei ebenfalls verändert werden, um die Spitze 1 zu optimieren. Nach jedem Verändern 11 des Winkels β1, β2 kann die Spitze 1 simuliert und bewertet werden. Das Optimieren der Winkel β1, β2 kann dabei ebenfalls teilautomatisiert erfolgen, beispielsweise wenn indem Winkel β1, β2 in einem Intervall schrittweise verändert werden und nach jedem Schritt die Spitze 1 simuliert und bewertet wird.

Die Spitzengrundform 1b weist dagegen einen stumpfen vorderen Abschnitt 5b auf. Diese Spitzengrundform 1b kann beispielsweise dazu verwendet werden, um lediglich die Tiefe des Grabens zu vermessen. Dabei kann es nicht auf die genaue Struktur ankommen. Die Spitzengrundform 1c kann dagegen verwendet werden, wenn eine Wand des Grabens abgetastet werden soll. Zusätzlich oder alternativ können mit der Spitzengrundform 1c beispielsweise auch die Ecken des Grabens abgetastet werden. Die Spitzengrundform 1c weist dazu im vorderen Abschnitt 5c einen Tellerabschnitt 6 auf. Der Tellerabschnitt 6 ragt über die Mantelfläche der Spitzengrundform 1c hinaus, so dass damit eine seitliche Wand abgetastet werden kann. Der Tellerabschnitt 6 weist insbesondere eine Breite auf, die größer ist als die Dicke D3 der Spitzengrundform 1c.

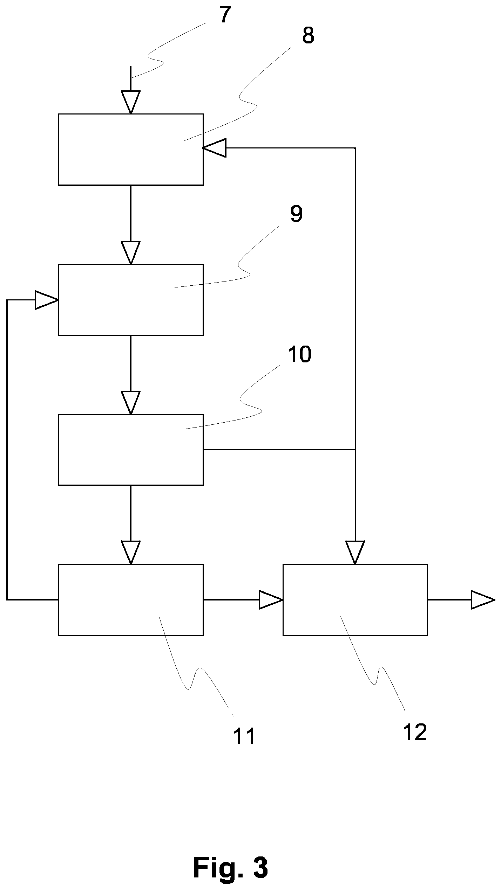

Figur 3 zeigt ein Flussdiagramm des erfindungsgemäßen Bereitstellens eines Datensatzes einer Spitze 1 für die Rastersondenmikroskopie. Als Eingangsdaten dienen definierte, vom Kunden geforderte Messeigenschaften 7 der Spitze 1. Der Kunde fordert beispielsweise Messeigenschaften 7 derart, dass mittels der Spitze 1 eine Tiefe eines Grabens und/oder eines Lochs in einem Halbleiterbauelement mit einer Tiefe von 200 nm vermessen werden kann. Der Graben kann beispielsweise eine Breite von 25 nm aufweisen. Dabei soll eine Struktur am Boden des Grabens mit einer Messauflösung von 5 nm vermessen werden. Dabei darf sich die Spitze 1 lediglich um einen bestimmten Winkel bzw. Versatz auslenken, um eine Qualität der Messung sicherzustellen.

Aufgrund dieser geforderten Messeigenschaften 7 kann bereits eine Spitzengrundform 1a - 1c in eine Auswahlschritt 8 ausgewählt werden, wie sie beispielsweise in Figur 2 gezeigt sind. Die Spitzengrundform 1a - 1c kann somit als Rohling für eine weitere Optimierung der Spitzengeometrie dienen. Es kann beispielsweise die Spitze 1a der Figur 2 ausgewählt werden, da eine Tiefe des Grabens sowie eine Struktur am Boden des Grabens für den Kunden entscheidend ist.

Nach der Auswahl 8 der Spitzengrundform 1a - 1c kann eine Simulation 9 der zur Spitzengrundform 1a - 1c gehörenden Spitzengeometrie durchgeführt werden. Die Simulation 9 kann beispielsweise mittels Finiter-Elemente-Methoden durchgeführt werden. Anhand der Simulation 9 kann eine Auslenkung, eine Verbiegung und/oder eine Belastung der Spitze 1 durch die auf die Spitze 1 wirkenden Kräfte, beispielsweise van-der-Waals-Wechselwirkung, im Graben ermittelt werden. Anhand der Belastung kann beispielsweise erkannt werden, ob die Spitze 1 durch die Belastungen brechen wird, so dass beispielsweise eine neue Spitzengrundform 1a - 1c ausgewählt werden kann.

Nach der Simulation 9 kann auf Grundlage von Simulationsergebnissen eine Bewertung 10 der Spitze 1 durchgeführt werden. Die Simulationsergebnisse können beispielsweise ergeben, dass eine vom Kunden vorgegebene Steifigkeit lediglich zu 50% erreicht ist. Bei der Bewertung 10 kann der Steifigkeit der Spitze 1 ein Bewertungswert, in diesem Beispiel beispielsweise ein Bewertungswert von 0,5, zugeordnet werden.

Zusätzlich oder alternativ können die Simulationsergebnisse umfassen, dass mittels der Spitze 1 eine vom Kunden geforderte Messauflösung lediglich zu 50% erreicht wird. Der Messauflösung kann ebenfalls ein Bewertungswert zugeordnet werden, der in diesem Beispiel beispielsweise 0,5 betragen kann. Daraus kann eine Bewertung 10 erstellt werden, die in diesem Fall aussagt, dass die von Kunden geforderten Messeigenschaften nicht erreicht sind. Die beiden oben genannten Bewertungswerte können zu einem Gesamtbewertungswert zusammengefasst werden, um mit Hilfe eines einzigen Wertes Aussagen treffen zu können, ob die geforderten Messeigenschaften erreicht sind.

Die Bewertungswerte können auch die vom Kunden geforderten Messeigenschaften überschreiten, d.h. die Spitze 1 erfüllt die Messanforderungen des Kunden, so dass unmittelbar mit der Herstellung 12 der Spitze 1 begonnen werden kann. Dadurch können Zeit und somit Kosten eingespart werden.

Alternativ kann auch, wenn die Bewertung 9 beispielsweise schlecht ausfällt, d.h. wenn die geforderten Messeigenschaften nicht erreicht sind, zurück zur Auswahl 8 der Spitzengrundform 1a - 1c gegangen werden. Es kann dann eine andere Spitzengrundform 1a - 1c gewählt werden, die besser als Ausgangspunkt für die Optimierung der Spitzengeometrie geeignet ist.

Nach der Bewertung 10 kann die Spitzengeometrie in Abhängigkeit der Bewertung 10 bei der erneuten Simulation mit Hilfe der Finiten-Elemente-Methode verändert werden. Die Veränderung 11 kann beispielsweise simulativ eine Veränderung 11 der Dicke D und/oder eine Veränderung der Länge L umfassen. Im vorliegenden Fall, wenn die geforderten Messeigenschaften nicht erreicht sind, kann beispielsweise eine Dicke D der Spitze 1 in zumindest einem Bereich vergrößert werden, um die nötige Steifigkeit zu erreichen. Zusätzlich oder alternativ kann auch eine Länge L der Spitze 1 reduziert werden. Dabei muss jedoch darauf geachtet werden, dass die vom Kunden geforderten Messeigenschaften eingehalten werden. Beispielsweise kann die Spitze 1 nicht so weit verkürzt werden, dass sie den Boden des Grabens nicht mehr erreichen kann. Dadurch fällt der Bewertungswert der Abmessungen beispielsweise von einem Bewertungswert "1", was beispielsweise der Eignung entspricht, dass die Spitze 1 den Boden messen kann, auf den Bewertungswert "0", was bedeutet, dass die Spitze 1 den Boden des Grabens nicht mehr messen kann und somit nicht für die Messung des Bodens geeignet ist.

Die Optimierung der Spitzengeometrie kann teilautomatisiert erfolgen. Beispielsweise kann die Veränderung 11 der Spitzengeometrie manuell erfolgen, bevor die Simulation mit Hilfe der Finite-Elemente-Methode wiederholt wird. Dabei kann auf Erfahrungswerte eines Herstellers zurückgegriffen werden.

Die Optimierung der Spitzengeometrie kann auch dadurch teilautomatisiert erfolgen, wenn beispielsweise ein Intervall von Längen L der Spitze 1 vorgegeben wird, wobei die Längen L des Intervalls schrittweise simuliert und/oder bewertet werden. Beispielsweise kann bei einer Länge L der Spitze 1 mit dem Simulieren begonnen werden, die 200 nm beträgt. Nach dem Simulieren 9 und/oder dem Bewerten 10 kann die Länge L der Spitze 1 schrittweise, beispielsweise um 5 nm, bis zu 300 nm erhöht werden, wobei nach jedem Schritt die Spitze 1 erneut simuliert und bewertet wird. Das Simulieren gemäß dem Intervall erfolgt dabei automatisch. Die Festlegung des Intervalls und/oder der Schritte kann manuell erfolgen. Insbesondere können nach jedem Intervall andere Werte für das Intervall, z.B. Untergrenze, Obergrenze und/oder Schritte, manuell eingestellt werden.

Nach der simulativen Veränderung 11 der Spitzengeometrie kann bei positiver Bewertung mit der Herstellung 12 der Spitze 1 begonnen werden. Alternativ kann nach der Veränderung 11 auch ein Datensatz, der die Spitzengeometrie beschreibt, an den Kunden geschickt werden. Der Kunde kann dann selbst die optimierte Spitze 1 herstellen oder diese herstellen lassen.

Alternativ kann auch nach der Veränderung 11 die nun neue Spitzengeometrie erneut in einer zusätzlichen Simulation 9 simuliert werden. Nach der Simulation 9 mit Hilfe der Finiten-Elemente-Methode kann eine weitere Bewertung 10 erfolgen. Nach dieser Bewertung 10 kann die Spitze 1 zur Herstellung 12 freigegeben oder eine neue Spitzengrundform in einem erneuten Auswahlschritt 8 ausgewählt werden. Alternativ kann nach der zusätzlichen Bewertung 10 nochmals eine Veränderung 11 an der Spitzengeometrie durchgeführt werden. Danach kann die Spitze 1 ebenfalls zur Herstellung 12 freigegeben werden. Alternativ kann die nun nochmals veränderte Spitzengeometrie nochmals mittels der Simulation 9 simuliert werden.

Vorteilhafterweise wird das Simulieren 9, das Bewerten 10 und das Verändern 11 der Spitzengeometrie mehrmals durchgeführt. Dadurch kann die Spitze 1 bis zu einem oder zumindest bis nahe an ein Optimum verbessert werden.

Die Veränderung 11 der Spitze 1 kann auch derart sein, dass zu einer Spitzengeometrie aus einem vorherigen Simulations-, Bewertungs- und Veränderungsschritt zurückgekehrt und von dort aus anderweitig verändert wird.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spitze
- 2: Sondeneinrichtung
- 3: Ausleger
- 4: Spitzensockel
- 5: vorderer Abschnitt
- 6: Tellerabschnitt
- 7: geforderte Messeigenschaften
- 8: Auswahl der Spitzengrundform
- 9: Simulieren
- 10: Bewerten
- 11: Verändern
- 12: Herstellen
- 13: erster Bereich
- 14: zweiter Bereich
- 15: dritter Bereich

- L: Länge der Spitze
- D: Dicke der Spitze
- α: Winkel
- β: Winkel

## Patentansprüche

1. Computerimplementiertes Verfahren zum Bereitstellen eines Datensatzes einer Spitze (1) für eine Sondeneinrichtung (2) für die Rastersondenmikroskopie, insbesondere für die Rasterkraftmikroskopie, wobei ein Rastersondenmikroskop mit Hilfe der auf einem Ausleger (3) der Sondeneinrichtung (2) angeordneten Spitze (1) mit einer Spitzengeometrie zur Vermessung einer Probe verwendet wird,
**dadurch gekennzeichnet,**
**dass** in einem dem die Spitze (1) produzierenden Herstellungsprozess vorgelagerten Schritt die Spitzengeometrie in Form des Datensatzes, der die Spitze (1) beschreibt, ausgehend von einer zuvor ausgewählten Spitzengrundform hinsichtlich definierter, geforderter Messeigenschaften optimiert wird, indem die Spitzengeometrie in Form des Datensatzes bezüglich dieser Messeigenschaften rechnergestützt simuliert (9), bewertet (10) und in Abhängigkeit der Bewertung die Spitzengeometrie in Form des Datensatzes verändert (11) wird,
**dass** die Spitzengeometrie in Form des Datensatzes sukzessive durch Wiederholen der Schritte des Simulierens (9), Bewertens (10) und Veränderns (11) optimiert wird und
**dass** bei der Bewertung der Messeigenschaften die Steifigkeit der Spitze (1) und die Messauflösung der Spitze (1) berücksichtigt werden.

2. Computerimplementiertes Verfahren nach Anspruch 1, **dadurch gekennzeichnet, dass** bei der Bewertung der Messeigenschaften auch die Abmessungen (L, D) der Spitze (1) berücksichtigt werden.

3. Computerimplementiertes Verfahren nach Anspruch 1 oder 2, **dadurch gekennzeichnet, dass** bei der Bewertung der Steifigkeit der Spitze (1), der Messauflösung der Spitze (1) und/oder den Abmessungen (L, D) der Spitze (1) jeweils ein Bewertungswert zugeordnet wird.

4. Computerimplementiertes Verfahren nach Anspruch 3, **dadurch gekennzeichnet, dass** die Bewertungswerte zu einem Gesamtbewertungswert zusammengefasst werden.

5. Computerimplementiertes Verfahren nach zumindest einem der vorherigen Ansprüche, **dadurch gekennzeichnet, dass** bei Überschreiten eines über einem festgelegten Grenzwert liegenden Bewertungswerts und/oder Gesamtbewertungswerts die Spitzendicke (D) als Teil der Spitzengeometrie in Form des Datensatzes in zumindest einem Bereich verringert wird und/oder
dass bei Unterschreiten eines unter dem festgelegten Grenzwert liegenden Bewertungswerts und/oder Gesamtbewertungswert die Spitzendicke (D) in zumindest einem Bereich vergrößert wird.

6. Computerimplementiertes Verfahren nach zumindest einem der vorherigen Ansprüche, **dadurch gekennzeichnet, dass** bei Überschreiten eines über einem festgelegten Grenzwert liegenden Bewertungswerts und/oder Gesamtbewertungswerts die Spitzenlänge (L) als Teil der Spitzengeometrie in Form des Datensatzes vergrößert wird und/oder dass bei Unterschreiten eines unter dem festgelegten Grenzwert liegenden Bewertungswerts und/oder Gesamtbewertungswert die besagte Spitzenlänge (L) verringert wird.

7. Computerimplementiertes Verfahren nach zumindest einem der vorherigen Ansprüche, **dadurch gekennzeichnet, dass** die Schritte des Simulierens (9), Bewertens (10) und/oder Veränderns (11) so lange wiederholt werden, bis zumindest ein Bewertungswert und/oder der Gesamtbewertungswert (9) der Spitzengeometrie in Form des Datensatzes den vorher festgelegten Grenzwert überschreitet.

8. Computerimplementiertes Verfahren nach zumindest einem der vorherigen Ansprüche, **dadurch gekennzeichnet, dass** die Schritte des Simulierens (9), Bewertens (10) und/oder Veränderns (11) so lange wiederholt werden, bis sich bei einer weiteren rechnerischen Veränderung (11) der Spitzengeometrie in Form des Datensatzes zumindest ein Bewertungswert und/oder der Gesamtbewertungswert (9) nicht mehr verbessert.

9. Computerimplementiertes Verfahren nach zumindest einem der vorherigen Ansprüche, **dadurch gekennzeichnet, dass** die Simulation (9) der Spitzengeometrie in Form des Datensatzes und/oder die Bewertung (10) der Spitzengeometrie in Form des Datensatzes mit Hilfe von Finiter-Elemente-Methoden durchgeführt wird.

10. Recheneinheit zum Bereitstellen eines Datensatzes einer Spitze (1),
**dadurch gekennzeichnet,**
**dass** die Recheneinheit konfiguriert ist, ein computerimplementiertes Verfahren gemäß einem oder mehreren der vorherigen Ansprüche auszuführen.

11. Computerprogramm, das bei Ausführung durch eine Recheneinheit diese veranlasst, ein computerimplementiertes Verfahren zum Bereitstellen eines Datensatzes eines Spitze (1) gemäß einem oder mehreren der vorherigen Ansprüche 1 - 9 auszuführen.

12. Herstellungsverfahren einer Spitze (1) für eine Sondeneinrichtung (2) für die Rastersondenmikroskopie, insbesondere für die Rasterkraftmikroskopie, wobei ein Rastersondenmikroskop mit Hilfe der auf einem Ausleger (3) der Sondeneinrichtung (2) angeordneten Spitze (1) mit einer Spitzengeometrie zur Vermessung einer Probe verwendet wird,
bei dem ein die Spitze (1) beschreibender Datensatz mittels eines computerimplementierten Verfahrens gemäß einem der vorangegangenen Ansprüche 1 - 9 bereitgestellt wird und
bei dem mittels eines zumindest additiven Herstellungsverfahrens die Spitze (1) auf dem Spitzensockel (4), der auf dem Ausleger (3) angeordnet ist, hergestellt wird.

13. Herstellungsverfahren nach Anspruch 12, **dadurch gekennzeichnet, dass** zumindest ein Teil eines Oberflächenabschnitts der Spitze (1) zumindest nach einem Schritt des additiven Herstellungsverfahrens mittels eines subtraktiven Verfahrens, insbesondere eines reaktiven Ionen-Ätzens, abgetragen wird.

## Claims

1. A computer-implemented method for providing a data set of a tip (1) for a probe device (2) for scanning probe microscopy, in particular for atomic force microscopy, wherein a scanning probe microscope with the aid of the tip (1) arranged on a cantilever (3) of the probe device (2) and having a tip geometry is used for the measurement of a sample,
**characterized in that**
in a step preceding the production process producing the tip (1), the tip geometry in the form of the data set which describes the tip (1), starting from a previously selected basic tip shape with regard to defined, required measurement properties, is optimized **in that** the tip geometry in the form of the data set, with regard to these measurement properties, is, in a computer-assisted manner, simulated (9), evaluated (10) and, as a function of the evaluation of the tip geometry in the form of the data set, modified (11),
the tip geometry in the form of the data set is successively optimized by repeating the steps of simulating (9), evaluating (10) and modifying (11), and
the stiffness of the tip (1) and the measurement resolution of the tip (1) are taken into account in the evaluation of the measurement properties.

2. The computer-implemented method according to claim 1, **characterized in that** the dimensions (L, D) of the tip (1) are also taken into account in the evaluation of the measurement properties.

3. The computer-implemented method according to claim 1 or 2, **characterized in that** an evaluation value is assigned in each case in the evaluation of the stiffness of the tip (1), the measurement resolution of the tip (1) and/or the dimensions (L, D) of the tip (1).

4. The computer-implemented method according to claim 3, **characterized in that** the evaluation values are combined to form an overall evaluation value.

5. The computer-implemented method according to at least one of the preceding claims, **characterized in that** the tip thickness (D) as part of the tip geometry in the form of the data set is reduced in at least one region when an evaluation value and/or an overall evaluation value lying above a defined threshold value is exceeded, and/or the tip thickness (D) is increased in at least one region when an evaluation value and/or an overall evaluation value lying below the defined threshold value is fallen below.

6. The computer-implemented method according to at least one of the preceding claims, **characterized in that** the tip length (L) as part of the tip geometry in the form of the data set is increased when an evaluation value and/or an overall evaluation value lying above a defined threshold value is exceeded, and/or
said tip length (L) is reduced when an evaluation value and/or an overall evaluation value lying below the defined threshold value is fallen below.

7. The computer-implemented method according to at least one of the preceding claims, **characterized in that** the steps of simulating (9), evaluating (10) and/or modifying (11) are repeated until at least one evaluation value and/or the overall evaluation value (9) of the tip geometry in the form of the data set exceeds the previously defined threshold value.

8. The computer-implemented method according to at least one of the preceding claims, **characterized in that** the steps of simulating (9), evaluating (10) and/or modifying (11) are repeated until at least one evaluation value and/or the overall evaluation value (9) no longer improves in the case of a further computational modification (11) of the tip geometry in the form of the data set.

9. The computer-implemented method according to at least one of the preceding claims, **characterized in that** the simulation (9) of the tip geometry in the form of the data set and/or the evaluation (10) of the tip geometry in the form of the data set is carried out with the aid of finite element methods.

10. A computing unit for providing a data set of a tip (1),
**characterized in that**
the computing unit is configured to carry out a computer-implemented method according to one or more of the preceding claims.

11. A computer program which, when executed by a computing unit, causes the latter to carry out a computer-implemented method for providing a data set of a tip (1) according to one or more of the preceding claims 1-9.

12. A production method of a tip (1) for a probe device (2) for scanning probe microscopy, in particular for atomic force microscopy, wherein a scanning probe microscope with the aid of the tip (1) arranged on a cantilever (3) of the probe device (2) and having a tip geometry is used for the measurement of a sample,
in which a data set describing the tip (1) is provided by means of a computer-implemented method according to one of the preceding claims 1-9, and
in which the tip (1) is produced on the tip base (4) which is arranged on the cantilever (3) by means of an at least additive production method.

13. The production method according to claim 12, **characterized in that** at least a part of a surface section of the tip (1) is removed by means of a subtractive method, in particular reactive ion etching, at least after a step of the additive production method.

## Revendications

1. Procédé mis en œuvre par ordinateur pour mettre à disposition un ensemble de données d'une pointe (1) pour un dispositif de sonde (2) pour la microscopie à sonde à balayage, en particulier pour la microscopie à force atomique, un microscope à sonde à balayage étant utilisé à l'aide de la pointe (1) disposée sur un porte-à-faux (3) du dispositif de sonde (2) avec une géométrie de pointe pour la mesure d'un échantillon,
**caractérisé en ce que**
dans une étape précédant le processus de production produisant la pointe (1), la géométrie de pointe sous la forme de l'ensemble de données qui décrit la pointe (1) est optimisée à partir d'une forme de base de pointe sélectionnée au préalable en ce qui concerne des propriétés de mesure définies et exigées, **en ce que** la géométrie de pointe sous la forme de l'ensemble de données en ce qui concerne ces propriétés de mesure, est, par ordinateur, simulée (9), évaluée (10) et, en fonction de l'évaluation de la géométrie de pointe sous la forme de l'ensemble de données, modifiée (11),
**en ce que** la géométrie de pointe sous la forme de l'ensemble de données est optimisée successivement en répétant les étapes de simuler (9), de évaluer (10) et de modifier (11) et
**en ce que** la rigidité de la pointe (1) et la résolution de mesure de la pointe (1) sont prises en compte lors de l'évaluation des propriétés de mesure.

2. Procédé mis en œuvre par ordinateur selon la revendication 1, **caractérisé en ce que** les dimensions (L, D) de la pointe (1) sont également prises en compte lors de l'évaluation des propriétés de mesure.

3. Procédé mis en œuvre par ordinateur selon la revendication 1 ou 2, caractérisé en ce qu'une valeur d'évaluation est respectivement associée lors de l'évaluation de la rigidité de la pointe (1), de la résolution de mesure de la pointe (1) et/ou des dimensions (L, D) de la pointe (1).

4. Procédé mis en œuvre par ordinateur selon la revendication 3, **caractérisé en ce que** les valeurs d'évaluation sont regroupées en une valeur d'évaluation totale.

5. Procédé mis en œuvre par ordinateur selon au moins l'une quelconque des revendications précédentes, **caractérisé en ce qu'**en cas de dépassement d'une valeur d'évaluation située au-dessus d'une valeur limite définie et/ou d'une valeur d'évaluation totale, l'épaisseur de pointe (D) est réduite en tant que partie de la géométrie de pointe sous la forme de l'ensemble de données dans au moins une région et/ou
**en ce qu'**en cas de passage en dessous d'une valeur d'évaluation située en dessous de la valeur limite définie et/ou d'une valeur d'évaluation totale, l'épaisseur de pointe (D) est augmentée dans au moins une région.

6. Procédé mis en œuvre par ordinateur selon au moins l'une quelconque des revendications précédentes, **caractérisé en ce qu'**en cas de dépassement d'une valeur d'évaluation située au-dessus d'une valeur limite définie et/ou d'une valeur d'évaluation totale, la longueur de pointe (L) est augmentée en tant que partie de la géométrie de pointe sous la forme de l'ensemble de données et/ou
**en ce qu'**en cas de passage en dessous d'une valeur d'évaluation située en dessous de la valeur limite définie et/ou d'une valeur d'évaluation totale, ladite longueur de pointe (L) est réduite.

7. Procédé mis en œuvre par ordinateur selon au moins l'une quelconque des revendications précédentes, **caractérisé en ce que** les étapes de simuler (9), d'évaluer (10) et/ou de modifier (11) sont répétées jusqu'à ce qu'au moins une valeur d'évaluation et/ou la valeur d'évaluation totale (9) de la géométrie de pointe sous la forme de l'ensemble de données dépasse la valeur limite définie au préalable.

8. Procédé mis en œuvre par ordinateur selon au moins l'une quelconque des revendications précédentes, **caractérisé en ce que** les étapes de simuler (9), d'évaluer (10) et/ou de modifier (11) sont répétées jusqu'à ce qu'en cas de modification supplémentaire par calcul (11) de la géométrie de pointe sous la forme de l'ensemble de données, au moins une valeur d'évaluation et/ou la valeur d'évaluation totale (9) ne s'améliore plus.

9. Procédé mis en œuvre par ordinateur selon au moins l'une quelconque des revendications précédentes, **caractérisé en ce que** la simulation (9) de la géométrie de pointe sous la forme de l'ensemble de données et/ou l'évaluation (10) de la géométrie de pointe sous la forme de l'ensemble de données sont réalisées à l'aide de méthodes à éléments finis.

10. Unité informatique pour mettre à disposition un ensemble de données d'une pointe (1),
**caractérisé en ce que**
l'unité informatique est configurée pour réaliser un procédé mis en œuvre par ordinateur selon l'une quelconque ou plusieurs des revendications précédentes.

11. Programme informatique qui, lorsqu'il est exécuté par une unité informatique, amène celle-ci à réaliser un procédé mis en œuvre par ordinateur pour mettre à disposition un ensemble de données d'une pointe (1) selon l'une quelconque ou plusieurs des revendications précédentes 1 à 9.

12. Procédé de production d'une pointe (1) pour un dispositif de sonde (2) pour la microscopie à sonde à balayage, en particulier pour la microscopie à force atomique, un microscope à sonde à balayage étant utilisé à l'aide de la pointe (1) disposée sur un porte-à-faux (3) du dispositif de sonde (2) avec une géométrie de pointe pour la mesure d'un échantillon,
dans lequel un ensemble de données décrivant la pointe (1) est mis à disposition au moyen d'un procédé mis en œuvre par ordinateur selon l'une quelconque des revendications précédentes 1 à 9 et
dans lequel la pointe (1) est produite au moyen d'un procédé de production au moins additif sur le socle de pointe (4) qui est disposé sur le porte-à-faux (3).

13. Procédé de production selon la revendication 12, caractérisé en ce qu'au moins une partie d'une section de surface de la pointe (1) est enlevée au moins après une étape du procédé de production additif au moyen d'un procédé soustractif, en particulier d'une gravure ionique réactive.
